## Europäisches Patentamt
## European Patent Office
## Office européen des brevets

(19)

(11) Publication number: **0 259 156**
**A1**

(12)

# EUROPEAN PATENT APPLICATION

(21) Application number: **87307769.7**

(22) Date of filing: **03.09.87**

(51) Int. Cl.⁴: **C 10 G 11/18**

(30) Priority: 03.09.86 US 903183   03.09.86 US 903182
03.09.86 US 903187   03.09.86 US 903161
03.09.86 US 903364   03.09.86 US 903341
03.09.86 US 903185

(43) Date of publication of application:
**09.03.88 Bulletin 88/10**

(84) Designated Contracting States:
**BE DE FR GB IT NL**

(71) Applicant: **MOBIL OIL CORPORATION**
**150 East 42nd Street**
**New York New York 10017 (US)**

(72) Inventor: **Herbst, Joseph Anthony**
**60 Bryant Road**
**Turnersville New Jersey 08012 (US)**

**Owen, Hartley**
**5 Riverview Terrace**
**Belle Mead New Jersey 08502 (US)**

**Schipper, Paul Herbert**
**2506 Berwyn Road**
**Wilmington Delaware 19810 (US)**

(74) Representative: **Colmer, Stephen Gary**
**Patent Department c/o Mobil Services Company Limited**
**Mobil Court 3 Clements Inn**
**London WC2A 2EB (GB)**

(54) **Process for fluidized catalytic cracking with reactive fragments.**

(57) A catalytic cracking process operates with fragment generation, by thermally or catalytically cracking a hydrogen-rich hydrocarbon feed in the lower region of a riser reactor in the presence of conventional FCC catalyst and, preferably, an additive second catalyst of a shape selective zeolite with heavy feed added to react with the fragments. The process can be conducted in one or more riser FCC reactors. Preferably, an elutriable catalyst mixture of conventional and additive catalyst is used, with elutriation in a reactor riser or a catalyst stripper.

EP 0 259 156 A1

## Description

### PROCESS FOR FLUIDIZED CATALYTIC CRACKING WITH REACTIVE FRAGMENTS

In conventional fluidized catalytic cracking (FCC) processes, a relatively heavy hydrocarbon feed, e.g., a gas oil, is mixed with a hot regenerated cracking catalyst in the base of an elongated riser reactor and cracked to lighter hydrocarbons. The cracked products and spent catalyst are discharged from the riser and separated into a vapor phase and a catalyst phase. The catalyst passes through a stripper to remove entrained hydrocarbons from the catalyst, then catalyst is regenerated. The catalyst circulates between the reactor and the regenerator and transfers heat from the regenerator to the reactor, supplying heat for the endothermic cracking reaction.

Catalytic cracking processes are disclosed in U.S. 3,617,497, 3,894,923, 4,051,013, 4,309,279 and 4,368,114 (single risers) and U.S. 3,748,251, 3,849,291, 3,894,931, 3,894,933, 3,984,934, 3,894,935, 3,926,778, 3,928,172, 3,974,062 and 4,116,814 (multiple risers).

In 4,051,013, a naphtha feed and a gas oil feed are converted in the presence of amorphous or zeolite cracking catalyst in a riser reactor to high octane gasoline.

Several FCC processes use a mixture of catalysts having different catalytic properties, e.g., U.S. 3,894,934 uses a mixture of a large port zeolite cracking catalyst such as zeolite Y and shape selective zeolite such as ZSM-5. The combined catalyst system (or mixture) produces a gasoline product of relatively high octane rating.

In U.S. 4,116,814, Zahner teaches use of two different kinds of catalyst, with catalyst separation in the fluidized regenerator. This approach will work, but when a less coke sensitive catalyst containing ZSM-5 is used the catalyst spends time unnecessarily in the regenerator.

The approach taken in U.S. 4,490,241, Chou, to keeping the ZSM-5 additive out of the regenerator is to make the additive very light, so that it can be collected in secondary cyclones downstream of the riser reactor. Use of very small, or light, particles of ZSM-5 additive which is recycled from secondary cyclones will work but will result in rapid loss of ZSM-5 additive with catalyst fines. Use of light, or low density, ZSM-5 additive will also minimize the residence time of the ZSM-5 in the riser reactor because the light catalyst will not "slip" in the riser as much as the conventional catalyst. The light ZSM-5 will be largely kept out of the regenerator, but at the price of less residence time in the riser reactor.

U.S. 4,336,160 reduces hydrothermal degradation of conventional FCC catalyst by staged regeneration. However, all the catalyst from the reactor still is regenerated, thus providing opportunity for hydrothermal degradation.

Although FCC processes using very active zeolite based catalysts, or mixtures of two or more zeolite catalysts are known, they have not been used much for cracking of hydrogen-deficient feeds such a resids.

Hydrogen-deficient heavy hydrocarbon feeds such as resids, syncrudes, etc., are usually cracked to more valuable products by thermal cracking, perhaps with a hydrogen donor diluent material. The hydrogen donor diluent is a material, which can release hydrogen to a hydrogen-deficient oil in thermal cracking.

Resids are usually not cracked in FCC units for several reasons, one being too much coke formation. Coke formed during catalytic cracking is usually a hydrocarbonaceous material sometimes referred to as a polymer of highly condensed, hydrogen-poor hydrocarbons. Resids make a lot of coke, and conventional FCC's can only tolerate small amounts of resid and similar materials in the feed.

Although modern zeolite cracking catalysts, e.g., using zeolites X and Y, are low coke producing catalysts, FCC's still do not tolerate much resid in the feed.

Because heavy hydrogen deficient feeds are so hard to upgrade catalytically, refiners usually resort to thermal processings as a "last resort". Visbreaking and coking are the preferred way of dealing with resids. Visbreaking reduces the viscosity of a heavy fuel fraction. Coking produces valuable liquid products, but converts a good portion of the feed to low value coke, frequently 20 to 30 wt % coke is produced.

In U.S. 4,035,285, a low molecular weight carbon-hydrogen contributing material and a high molecular weight feedstock, e.g., a gas oil, are combined and reacted in the presence of one or more zeolite catalysts, e.g., zeolite Y with ZSM-5. The resulting cracking and carbon-hydrogen additive products are superior to those formed in the absence of the low molecular weight carbon-hydrogen crackability of heavy feedstocks, increased gasoline yield and/or higher gasoline quality (including octane and volatility), and fuel oil fractions of improved yield and/or burning quality and lower levels of potentially polluting impurities such as sulfur and nitrogen. In addition, the need for high pressure hydrotreaters and hydrocrackers is reduces or eliminated.

A similar process in which full range crude oils and naphtha are catalytically cracked in the presence of such low molecular weight carbon-hydrogen contributing material and zeolites in separate risers of a multiple riser catalytic cracking unit is described in U.S. 3,974,062.

In spite of the many advances made, there is still a need for an FCC process which can upgrade heavy, hydrogen-deficient feeds without overwhelming the FCC regenerator with coke. It would be beneficial if mixtures of different kinds of catalyst could be used for the upgrading, with customized treatment of each kind of catalyst to maximize the potential of each catalyst.

A way has now been discovered to upgrade these refractory stocks. At its most basic level, low molecular weight carbon-hydrogen fragments are generated in the base of the riser, to react with heavy feed added higher up in the riser. This promotes catalytic cracking of the feed to products which contribute to gasoline boiling range material.

Use of an elutriable catalyst, e.g., a mixture of low coke forming, long lasting additive catalyst such as ZSM-5 with conventional FCC catalyst allows refiners to break the chains that heretofore made regeneration of additive catalysts inevitably proceed in lockstep with the conventional catalyst regeneration. Catalyst elutriation allows more efficient fragment generation, and more efficient cracking of the heavy feed.

Accordingly, the present invention provides a fluidized catalytic cracking process wherein a conventional catalytic cracking catalyst contacts a fresh feed in a riser have a base and an outlet to produce cracked products and spent catalyst which is stripped in a catalyst stripper and regenerated with an oxygen containing gas to produce regenerated catalyst which is recycled to the riser to crack more fresh feed characterized by generating reactive fragments in the riser by contacting a light hydrogen-rich gas with catalyst to generate reactive fragments at the base of the riser which react with the feed in the riser.

Each important parameter of the process will be discussed. Those parts of the process which are conventional will receive only brief mention. The following will be considered:

    1. Conventional FCC catalysts (e.g., REY in matrix)

    2. Additive FCC catalysts (e.g., ZSM-5 in a matrix)

    3. $H_2$ deficient feeds (e.g., Resids)

    4. $H_2$ rich feeds (e.g., propane)

    5. FCC cracking conditions (e.g., single or dual riser)

    6. Fragment generation (e.g., cracking propane)

    7. Riser elutriation

    8. Stripper elutriation

    9. Sieve stripper

    10. Exothermic stripping

    11. Conventional catalyst regeneration (e.g., w/air)

    12. Catalyst reactivation (e.g., w/olefins)

Although each parameter is discussed, not all embodiments of the invention will require all elements discussed above. All elements will cooperate to upgrade heavy feeds, but economics will determine if, e.g., there is a reasonable return on investment from having both riser elutriation and stripper elutriation.

    Figure 1 illustrates a single riser FCC process of the invention.

    Figure 2 illustrates a dual riser FCC unit of the present invention.

    Figure 3 shows use of an elutriable catalyst mixture used in conjunction with an elutriating riser, an elutriating stripper, a reactivation zone, a resid feed and fragment generation.

    Figure 4 shows an embodiment similar to that of Figure 3, but with a preferred elutriating stripper.

    Figure 5 schematically illustrates an FCC unit of the invention with two risers, with a conventional heavy feed added to one riser and light $H_2$-rich feed added to the other riser.

    Figure 6 is a schematic view of an embodiment of the invention using a single elutriating riser, an elutriating stripper, with mid-riser addition of heavy feed and fragment generation at the base of the riser.

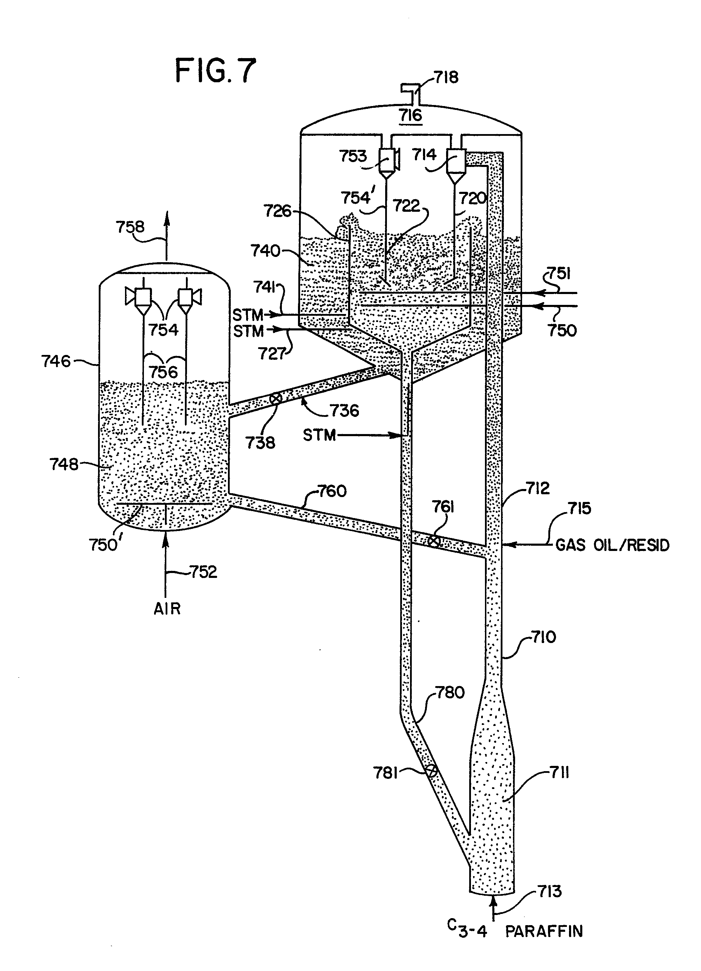

    Figure 7 illustrates another configuration of the present invention, using a single elutriating, FCC riser reactor, and an elutriating stripper.

## CONVENTIONAL FCC CATALYST

Conventional FCC catalysts are either amorphous or zeolitic. Most FCC's use zeolitic catalyst, typically a large pore zeolite, in a matrix which may or may not possess catalytic activity. The zeolites typically have crystallographic pore dimensions of 7.0 angstroms and above for their major pore opening. Zeolites which can be used in cracking catalysts include zeolite X (U.S. 2,882,244), zeolite Y (U.S. 3,130,007), zeolite ZK-5 (U.S. 3,247,195), zeolite ZK-4 (U.S. 3,314,752) to name a few, and naturally occurring zeolites such as chabazite, faujasite, mordenite, and the like. Silicon-substituted zeolites, described in U.S. 4,503,023 can also be used.

Two or more of the foregoing amorphous and/or large pore crystalline cracking catalysts can be used as the conventional catalyst. Preferred conventional catalyst are the natural zeolites mordenite and faujasite and the synthetic zeolites X and Y with particular preference given zeolites Y, REY, USY and RE-USY.

Such conventional FCC catalysts are well known.

## ADDITIVE FCC CATALYSTS

The present invention permits use of an optional additive catalyst, with different properties than the conventional catalyst.

Preferred additives comprise the shape selective medium pore zeolites exemplified by ZSM-5, ZSM-11, ZSM-12, ZSM-23, ZSM-35, ZSM-38, ZSM-48 and similar materials.

ZSM-5 is described in U.S. 3,702,886, U.S. Reissue 29,948 and in U.S. 4,061,724 (describing a high silica ZSM-5 as "silicalite").

    ZSM-11 is described in U.S. 3,709,979.

    ZSM-12 is described in U.S. 3,832,449.

    ZSM-23 is described in U.S. 4,076,842.

    ZSM-35 is described in U.S. 4,016,245.

    ZSM-38 is described in U.S. 4,046,859.

    ZSM-48 is described in U.S. 4,375,573.

    ZSM-5 is particularly preferred.

The additive zeolites can be modified in activity by dilution with a matrix component of significant or little catalytic activity. The matrix may act as a coke sink. Catalytically active, inorganic oxide matrix material is preferred because of its porosity, attrition resistance and stability under the cracking reaction conditions encountered particularly in a fluid catalyst cracking operation. The additive catalyst may contain up to 50 wt % crystalline material and preferably from 0.5 to 25 wt % in a matrix.

The matrix may include, or may be, a raw or natural clay, a calcined clay, or a clay which has been chemically treated with an acid or an alkali medium or both.

Zeolites in which some other framework element which is present in partial or total substitution of aluminum can be advantageous. For example, such catalysts may convert more feed to aromatics with higher octanes. Elements which can be substituted for part or all of the framework aluminum are boron, gallium, zirconium, titanium and other trivalent metals which are heavier than aluminum. Specific examples of such catalysts include ZSM-5 or zeolite beta containing boron, gallium, zirconium and/or titanium. In lieu of, or in addition to, being incorporated into the zeolite framework, these and other catalytically active elements can also be deposited upon the zeolite by any suitable procedure, e.g., impregnation. Thus, the zeolite can contain a hydrogen-activating function, e.g., a metal such as platinum, nickel, iron, cobalt, chromium, thorium (or other metal capable of catalyzing the Fischer-Tropsch or water-gas shift reactions) or rhenium, tungsten, molybdenum (or other metal capable of catalyzing olefin disproportionation).

### $H_2$ RICH FEEDS

Suitable hydrogen-rich hydrocarbon feeds are those containing 12 to 25 wt % hydrogen, e.g., $CH_4$, $C_2H_6$, $C_3H_8$, light virgin naphtha, and similar materials. Any or all of the $C_1$ to $C_5$ hydrocarbons recovered from the process can be used as $H_2$-rich feed to the lower region of the riser where these and other hydrogen-rich hydrocarbon materials undergo thermal cracking due to the hot, freshly regenerated cracking catalyst and/or shape selective catalytic cracking and other reactions due to the additive, e.g., the medium pore zeolite catalyst. The $H_2$-rich feed when cracked in the base of the riser generates gasiform material contributing mobile hydrogen species and/or carbon-hydrogen fragments.

### FRAGMENT GENERATION

The light, $H_2$-rich feed may be converted into reactive fragments thermally, catalytically, or both. Contact of $H_2$-rich feed with hot, regenerated conventional FCC catalyst will both thermally and catalytically crack the feed into reactive fragments.

Temperatures can range from 593 to 816°C (1100 to 1500°F) and preferably 677 to 732°C (1250 to 1350°F). The catalyst to feed ratio can be 50:1 to 200:1 and preferably is 100:1 to 150:1. The catalyst contact time can be 10 to 50 seconds and preferably is 15 to 35 seconds. Light olefin production is maximized by less severe operation.

Aromatics production is maximized by using more ZSM-5, preferably 0.1 to 25 wt % ZSM-5 and more preferably 1 to 10 wt % ZSM-5.

The easiest way to generate a lot of fragments is to have large amounts of hot regenerated conventional catalyst contact relatively small amounts of light, hydrogen-rich feeds such as propane.

### $H_2$ DEFICIENT FEEDS

Suitable charge stocks for cracking in the riser comprise the heavy hydrocarbons generally and, in particular, conventional heavy petroleum fractions, e.g., gas oils, thermal oils, residual oils, cycle stocks, whole crudes, tar sand oils, shale oils, synthetic fuels, heavy hydrocarbon fractions derived from the destructive hydrogenation of coal, tar, pitches, asphalts, hydrotreated feedstocks derived from any of the foregoing, and the like. In short, any conventional feedstock, and preferably a hydrogen-deficient feedstock can be used in the process of this invention.

### RISER ELUTRIATION

When an elutriatable catalyst is charged to the process of the present invention, it is preferred to have a riser elutriation zone. This can be a zone at either the bottom or top of the riser of increased cross-sectional area. The increased cross-sectional area results in lower superficial vapor velocity in the riser, which allows the catalyst (preferably the additive) with the highest settling velocity to remain longer in the riser.

As a general guideline, the feed rate, riser cross-sectional area, and additive catalyst properties should be selected so that the additive catalyst settling rate approaches the superficial vapor velocity expected in the riser.

Riser expansion to handle increased molar volumes in the riser reactor would not change superficial vapor velocity and would not produce significant elutriation. Conversely, a constant diameter riser would provide elutriation at the base of the riser.

### STRIPPER ELUTRIATION

When a elutriatable catalyst mixture is used, it is preferred to operate with a catalyst stripper which separates more from less elutriatable catalyst.

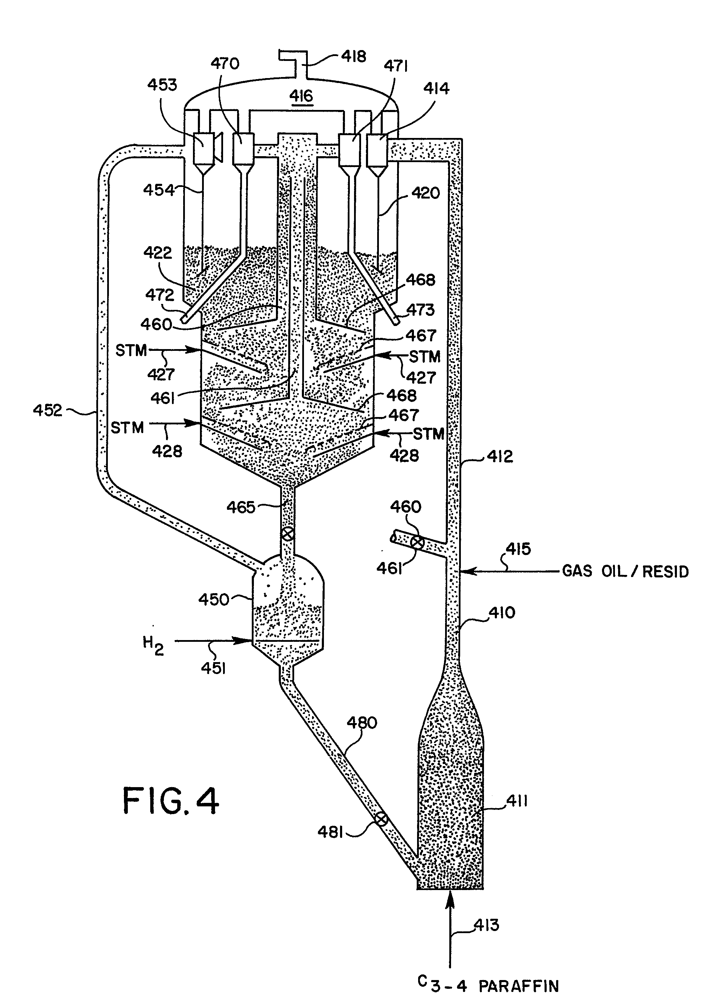

Separation in the stripper can be achieved by particle size difference alone, i.e., a sieve action. Preferably a stripper is used which separates conventional catalyst from additive catalyst by exploiting differences in settling velocity - such a design is shown in Figure 4.

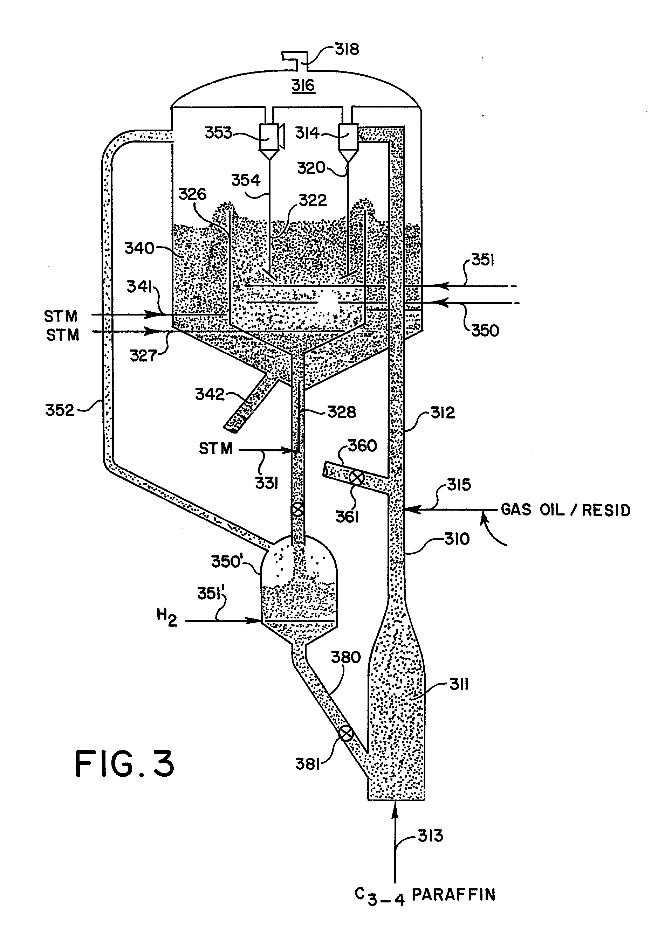

A closely related approach is one which relies to some extent on settling properties and to some extent on catalyst density, as shown in Figure 3.

Stripper elutriation separates additive catalyst from conventional catalyst upstream of the catalyst regenerator. If elutriation occurred in the catalyst regenerator, then the additive catalyst (which may not need regeneration and may be damaged by regeneration) is unnecessarily subjected to regeneration. Thus stripper elutriation significantly reduces additive catalyst residence time in the FCC regenerator.

Additional elutriation may occur in the FCC regenerator, by means not shown, however, it is the goal of the present invention to keep the additive out of the regenerator. Regenerator elutriation would minimize damage to additive catalyst and may be a beneficial way of quickly removing from the regenerator small amounts of additive which will spill over into the regenerator.

Riser elutriation, and stripper elutriation, preferably with the additive catalyst being a denser catalyst which settles rapidly, minimize loss of additive catalyst with catalyst fines. If elutriating cyclones were used to separate a light, readily elutriable additive from reactor effluent prior to discharge from the reaction vessel, then there would be a significant increase in loss of additive catalyst with fines. There would also be a significant dilution effect caused by accumulation of conventional catalyst finds with more elutriatable additives. Finally use of a light additive would reduce the residence time of the additive in the FCC riser reactor, because it would tend to be blown out of the reactor faster than the conventional catalyst.

### EXOTHERMIC STRIPPING

Stripping efficiency can be improved by adding one or more light olefins to a stripping zone. The light olefins form higher molecular weight products (which are valuable) and heat (which aids stripping).

If exothermic stripping is to be practices enough olefins should be added to increase the temperature at least 10°C (50°F) and preferably at least 38°C (100°F) or more.

### CONVENTIONAL CATALYST REGENERATION

The conditions in the FCC catalyst regenerator are conventional. U.S. 4,116,814 (and many other patents) discuss regeneration conditions.

### CATALYST REACTIVATION

Reactivation of additive catalyst, or conventional catalyst, with hydrogen or hydrogen-rich gas may be practiced herein. Catalyst reactivation is, per se, conventional.

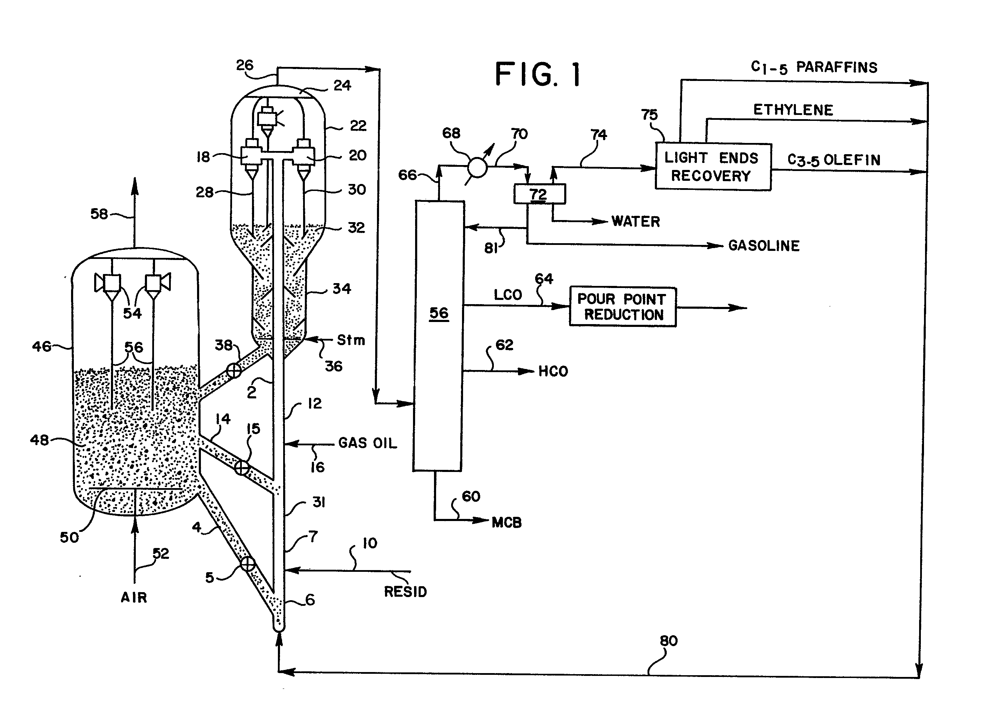

In Figure 1, hot regenerated conventional FCC catalyst, comprising, e.g., zeolite Y, is admixture with additive comprising, e.g., ZSM-5 is transferred from regenerator 46 via line 4 and flow control valve 5 to the lower region 6 of riser 2 where it combines with $H_2$-rich hydrocarbons, e.g., $C_1$ to $C_5$ paraffins and olefins from gas plant 75, added via line 80. The light feed thermally cracks in region 6 due to the presence of the hot catalyst. Selective catalytic cracking of paraffins also occurs over the ZSM-5. Preferred conditions in region 6 include a temperature of 593 to 816°C (1100 to 1500°F) and more preferably 677 to 732°C (1250 to 1350°F), a catalyst to feed weight ratio of 50:1 to 200:1, and more preferably from 100:1 to 150:1 and a catalyst contact time of 10 to 50 seconds and preferably from 15 to 35 seconds. Thermal/catalytic cracking in region 6 generates mobile hydrogen and/or carbon-hydrogen fragments. These fragments react readily with the heavy hydrocarbon feed added further up the riser.

The catalyst-hydrocarbon fragment suspension formed in region 6 ascends riser 2 to an intermediate region 7 where a resid feed is added via line 10. The resid reacts with the carbon-hydrogen fragments. Preferred conditions in intermediate region 7 include 510 to 621°C (950 to 1150°F), more preferably from 538 to 593°C (1000 to 1100°F), a catalyst to feed ratio of 3:1 to 10:1, more preferably from 4:1 to 8:1 and a catalyst contact time of 0.5 to 10 seconds, more preferably 1 to 5 seconds. The catalyst-hydrocarbon suspension continues up riser 2 to upper region 12 where more hot, freshly regenerated catalyst may optionally be added via conduit 14 and valve 15. An optional gas oil stream may be added via line 16. Reaction conditions in region 12 may be the same as in region 7. The gas oil cracks in region 12 to gasoline boiling range product. The catalyst-hydrocarbon suspension continues up the riser and is discharged, preferably into cyclone separators 18 and 20 in the upper portion of vessel 22 where catalyst is recovered from hydrocarbon vapors. These vapors pass into a plenum chamber 24 for removal via conduit 26. Catalyst is discharged by diplegs 28 and 30 to a fluid bed of catalyst 32 in the lower portion of vessel 22. Catalyst in bed 32 flows down to stripper 34. Stripping gas is introduced by conduit 36. The stripper temperature is 482 to 621°C (900 to 1150°F). Higher temperatures may be achieved by adding hot regenerated catalyst to the stripper by means not shown. Stripped catalyst is removed from the bottom of the stripper via conduit 38 for transfer to regenerator 46.

The conventional catalyst is conventionally regenerated with oxygen-containing gas, usually air. Regeneration air is added to the lower portion of dense bed 48 via air distributor 50 and conduit 52. Cyclone separators 54 recover entrained catalyst from flue gas and discharges the catalyst via diplegs 56. Flue gas from the cyclones enters plenum chamber and is then removed via line 58. Hot regenerated catalyst is then returned to the lower and upper regions of riser 2 by conduits 4 and 14.

Hydrocarbon products are conveyed from plenum chamber 24 via line 26 to fractionation zone 56 where products are separated. Main column bottoms (MCB) are conveyed from the fractionator by line 60 for recycle to riser 2 through line 16 or for some other use. A light cycle oil (LCO) product is withdrawn by line 64. An overhead fraction comprising gasoline and lighter hydrocarbons is withdrawn from fractionator 56 via line 66 which passes through cooler 68 and line 70 to knockout drum 72 which separates water and gasoline from vapor. The vapor is charged via line 74 to a light ends recovery operation 75 which recovers, for example, $C_1$ to $C_5$ paraffins for recycle via line 80. A gasoline fraction from drum 72 is recycled via line 81 to reflux the fractionator.

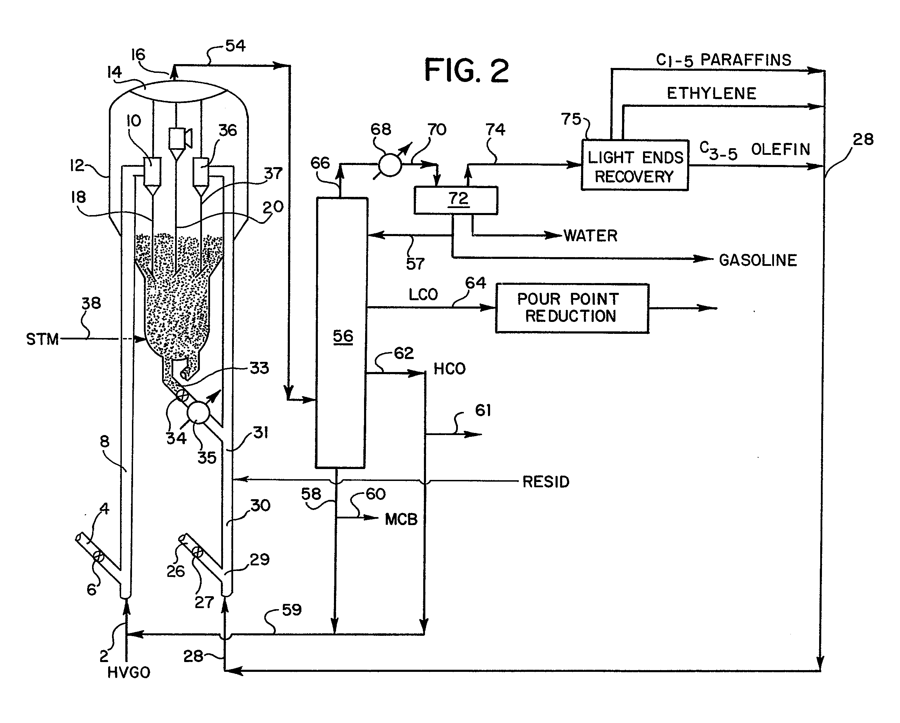

Figure 2 of the draings shows a two riser FCC. A conventional heavy virgin gas oil feed, optionally one which has been hydrotreated is charged to the FCC riser via line 2. Hot regenerated catalyst preferably comprising zeolite Y in admixture with ZSM-5, flows via line 4 and valve 6 to the base of riser 8. A suspension of catalyst in oil vapors passes up through first riser reactor 8. Conditions in riser 8 can be varied to maximize production of naphtha or light hydrocarbons, principally $C_2$ to $C_4$ olefinic hydrocarbons. To maximize production of naphtha, the ZSM-5 zeolite can be from 0.01 to 10, and preferably from 0.1 to 5 wt % of the total catalyst. Temperatures can range from 482 to 621°C (900 to 1150°F) and preferably 495 to 538°C (925 to 1000°F). The catalyst to feed ratio can range from 2:1 to 20:1 and preferably 4:1 to 10:1. The catalyst contact time can range from 0.5 to 30 seconds and preferably from 1 to 15 seconds. When more light ends, and less naphtha, is desired, the ZSM-5 zeolite may be 0.5 to 25, and preferably 1 to 10 wt % of the total catalyst, with the same reaction conditions. Riser 8 discharges into cyclone 10 in the upper portion of vessel 12. Hydrocarbon vapors pass via plenum chamber 14 and conduit 16 to downstream product separation. Catalyst recovered in cyclone 10 is discharged by dipleg 18 into a bed of catalyst 20 therebelow.

In fractionator 56 cracked products are separated. The heaviest product is main column bottoms (MCB), recycled via lines 58 and 59 to riser 8 or withdrawn as product via line 60. A heavy cycle oil (HCO) fraction is withdrawn via line 62 for recycle via line 59 to riser 8 or removed as product via line 61. Light cycle oil (LCO) product is withdrawn via line 64. Gasoline and lighter hydrocarbons are withdrawn from an upper portion of fractionator 56 by line 66. Overhead vapor in line 66 passes through cooler 68 and line 70 to drum 72 there water and gasoline are separated from vapor. Vapor is sent via line 74 to a light ends recovery operation 75 which recovers light hydrocarbons such as $C_1$ to $C_5$ paraffins and $C_2$ to $C_5$ olefins. Gasoline separated in drum 72 is refluxed via line 57 to the fractionator or removed as product.

Hot freshly regenerated catalyst passes to the inlet of second riser 30 via conduit 26 and valve 27. One or more light hydrocarbon streams from light ends recovery operation 75 is charged via line 28 to a lower region 29 of riser 30. The light hydrocarbons and catalyst form a suspension. In section 29 the preferred conditions include a temperature of 593 to 816°C (1100 to 1500°F) and more preferably 677 to 732°C (1250 to 1350°F), a catalyst to feed ratio of 50:1 to 200:1 and more preferably 100:1 to 150:1 and the catalyst contact time is 10 to 50 seconds. These conditions generate carbon-hydrogen fragments.

The suspension formed in region 29 rises to upper region 31 wherein a resid feed is added. The resid reacts with the hydrocarbon fragments. Temperature in region 31 can be controlled by adding stripped, non-regenerated catalyst via line 33, control valve 34 and cooler 35. The stripped catalyst, which is relatively cool, can quench the reaction in the upper region of the second riser.

The hydrocarbon catalyst mixture in riser 30 discharges into cyclone separator 36. Catalyst is discharged via dipleg 37 into the lower portion of vessel 12 as bed 20 moving down through a stripping zone. Stripping steam is added via line 38. Cracked products from riser 30 pass to plenum chamber 14 and are removed via lines 16 and 54 to conventional product recovery unit 56.

Catalyst is withdrawn from the stripper and sent to a conventional catalyst regenerator (not shown).

Figure 3 shows use of an elutriable catalyst mixture used in conjunction with an elutriating riser, an elutriating stripper, a reactivation zone, a resid feed and fragment generation.

Riser reactor 210 receives $C_3$ and $C_4$ paraffins in lower region 211 through line 213 and stripped, reactivated catalyst via line 280 and valve 281. The stripped catalyst contains a lot of ZSM-5. Conditions in region 211 can be varied to maximize production of aromatics or light olefins, by varying the ZSM-5 content, and using fragment generation conditions previously discussed.

A heavy hydrocarbon feed, e.g., a gas oil and/or resid, is added in region 212 of riser 210 via line 215. The feed combines with the ascending catalyst-hydrocarbon vapor suspension from region 11. Addition of hot, regenerated conventional catalyst from the regenerator via conduit 260 and valve 261 permits some control of catalyst composition in region 12 and also come control of the temperature. Preferably the zeolite Y concentration is 2 to 50, most preferably 5 to 25 wt %. The temperature can be 482 to 621°C (900 to 1150°F) and preferably 496 to 566°C (925 to 1050°F). The preferred catalyst to heavy hydrocarbon feed ratio is 3:1 to 20:1 and most preferably 4:1 to 10:1. The catalyst contact may be 0.5 to 30 seconds, and preferably 1 to 15 seconds. The heavy hydrocarbon feed cracks in the riser to lower boiling products and reacts with reactive fragments generated in the base of the riser. The riser discharges into cyclone separator 214 which separates catalyst from gas. Catalyst is discharged via dipleg 220 into bed 222. Vapor enters plenum chamber 216.

Vessel 226 occupies a central region of the stripping zone. Stripping gas, e.g., steam, from line 227 in the lower section thereof carries the conventional catalyst out of the vessel. The additive, a dense ZSM-5 containing catalyst, gravitates to and concentrates at the bottom of vessel 226. It is removed via conduit 228 which may have a source of low pressure steam 231 for stripping and to blow conventional catalyst, entrained with the additive, back into bed 222. The additive is then introduces to reactivation vessel 250' which can also operate as a stripper. $H_2$ or $H_2$-rich gas is added via line 251. Reactivation takes place under conventional conditions. Gaseous reactivation effluent, with some entrained catalyst, passes via line 252 to cyclone separator 253. Vapor passes to plenum chamber 216. Catalyst passes to bed 222 via dipleg 254. Reactivated catalyst passes via line 280 and valve 281 to riser 210.

Conventional catalyst displaced from vessel 226 enters outer peripheral regions 240 stripping gas, e.g., steam, is added through conduit 241. Stripping gas, stripped hydrocarbons and reactivation vapor enter cyclone separator 253. Vapor passes to plenum chamber 216. Catalyst enters bed 222 via dipleg 254. Stripped, spent conventional catalyst continues down through the strippter and is sent via line 242 to a regenerator (not shown).

A light olefin feed, e.g., a gas rich in ethylene and/or propylene, may be added to the bottom of bed 222 via line 250 to make higher molecular weight products and generate heat. High temperatures improve the efficiency of the stripper. Enough olefins should be added to increase the temperature at least 28°C (50°F), and preferably by 56°C (100°F) or more. Optionally, if line 250 contains ethylene, then 0.1 to 5 wt % propylene, butylene or mixtures can be added to bed 222 via line 251.

Hydrotreating of the feed may be beneficial. $H_2$ derived from the FCC operation may be compressed and used in the hydrotreater.

The embodiment shown in Figure 4 is essentially like that described in connection with Figure 3 except for the manner in which the additive is separated from the conventional catalyst in the stripper. Descending catalyst bed 422 in an outer region of the stripper encounters stripping gas, e.g., steam, added via lines 427 and 428 which lifts the less dense particles of catalyst, e.g., the conventional catalyst, up concentrically arranged vertical lines 460 and 461. The more dense particles, e.g., ZSM-5 additive catalyst, flow down to be reactivated and then returned to riser 410. Stripping gas is preferably added below perforated baffles 467 to force the elutriable catalyst against baffles 468 and up lines 460 and 461 which lead to one or more cyclone separators 470 and 471 which discharge stripped, spent catalyst via lines 472 and 473 to the regenerator (not shown).

Although Figure 4 shows use of a dense, or less elutriable, additive it is also possible to reverse the relative setting rates and use an additive which is less dense than the conventional catalyst. In that case the additive will be removed overhead in the stripper.

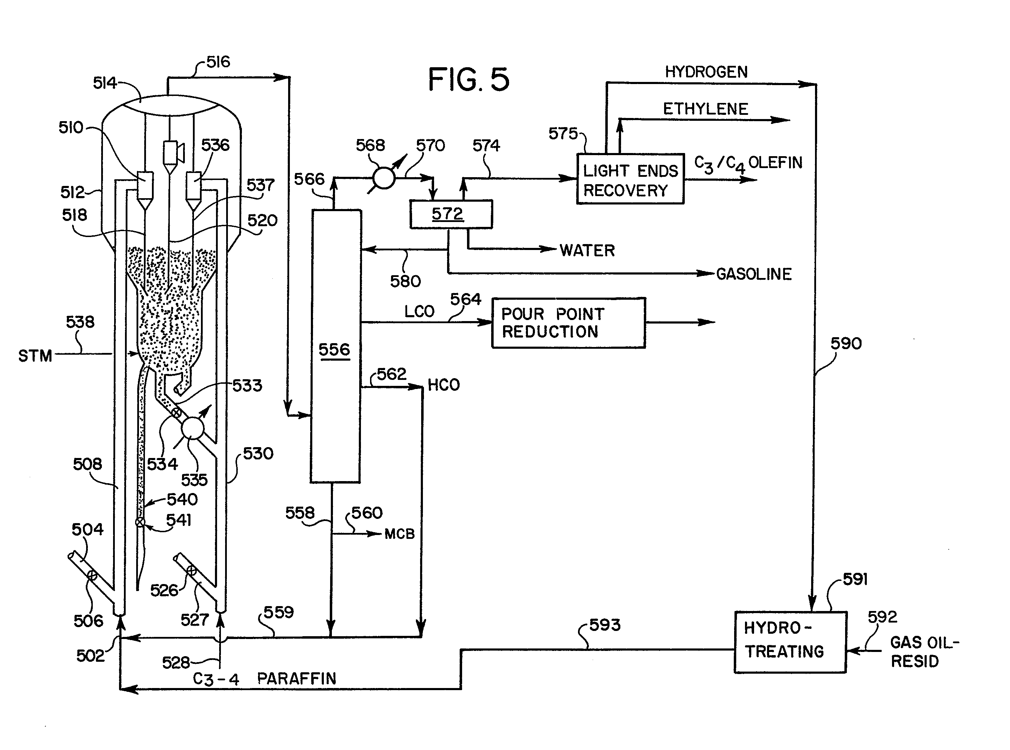

In Figure 5 a gas oil/resid feed from line 502 is combined with hot regenerated conventional catalyst in admixture with ZSM-5 from line 504 to form a suspension which passes up through first riser reactor 508. The conversion conditions within first riser 508 can be varied to maximize production of naphtha or light olefins by varying the ZSM-5 content of the catalyst mixture. Recycle of ZSM-5 rich additive from the stripper to riser 508 via line 540 and valve 541 permits control of the ZSM-5 concentration in the riser. To maximize the production of naphtha, the ZSM-5 zeolite can be 0.1 to 10, and more preferably from 0.2 to 5 wt% of the total catalyst admixture. Temperatures can be 482 to 621°C (900 to 1150°F) and more preferably from 496 to 538°C (925 to 1000°F). The catalyst to oil ratio can be 3:1 to 20:1 and more preferably from 4:1 to 10:1. The catalyst contact time can be 0.5 to 30 seconds and more preferably 1 to 15 seconds. Light olefin production can be maximized (at the expense of the naphtha) having 1 to 25, and more preferably 2 to 10 wt% ZSM-5 in the total catalyst mixture. In the riser, conversion of the gas oil feed to lower boiling products occurs. Cracked products are separated from catalyst in a cyclone 510 in the upper portion of vessel 512. Hydrocarbon vapors pass into plenum chamber 514 and are removed via line 516 for separation in downstream operations. Catalyst recovered in cyclone 510 is discharged by dipleg 518 down into a bed of catalyst 520. In fractionator 556, a main column bottoms (MCB) fraction is recovered from the bottom of the fractionator via line 559 and recycled via line 502 to riser 508, withdrawn via line 560 for other use. A heavy cycle oil (HCO) fraction is withdrawn via line 562 for recycle via line 559 to riser 508, or recovcered as product. A light cycle oil (LCO) fraction, is withdrawn via line 564. An overhead vapor fraction of gasoline and lower boiling hydrocarbons is withdrawn from an upper portion of fractionator 556 via line 566, cooled in cooler 568 and passed via line 570 to knockout drum 572. Water and liquid gasoline fractions are separated from lower boiling vapor components. The vapor is withdrawn via line 574 and sent to a light ends recovery operation 575. The gasoline fraction in drum 572 may be recycled via line 580 as reflux to the fractionator or withdrawn as product.

Hot freshly regenerated catalyst enters riser 530 via line 526 and valve 527. A $C_3$ to $C_4$ paraffin-rich stream from line 528 enters a lower region of second riser 530 for fragment generation, at fragment generation conditions.

As the suspension formed in the base of second riser 530 ascends it enters an upper region where some conversion of light olefins to gasoline occurs. Temperature can be controlled by adjusting the quantity of stripped catalyst mixture introduced via line 533, valve 534 and cooler 535. This non-regenerated catalyst mixture has little non-selective cracking activity remaining (the zeolite Y component is spent), but retains much of its aromatization activity (attributale to the ZSM-5). Depending upon its temperature, this catalyst can quench the upper region of the second riser to promote oligomerization and minimize aromatization. Low temperatures favor higher liquid yields at the expense of octane number. High temperatures favor aromatization and production of hydrogen, methane and some other light paraffins. Temperature in the upper region of riser 530 can be 204 to 538°C (400 to 1000°F), more preferably 343 to 427°C (650 to 800°F), (catalyst to hydrocarbon ratios may be 5:1 to 40:1, more preferably from 20:1 to 30:1 and catalyst contact times of 5 to 45 seconds, more preferably 25 to 35 seconds. The hydrocarbon product/catalyst stream discharges into cyclone 536. Catalyst is discharged from dipleg 537 into bed 520 in the lower portion of vessel 512. Stripping gas, e.g., steam, is added via line 538. Hydrocarbon products from riser 530 pass to plenum 514 via line 516 to a conventional product recovery unit.

$H_2$ recovered from the light ends recovery plant 575 may be used in a conventional hydrotreater 591 to upgrade the gas oil/resid feed in line 592.

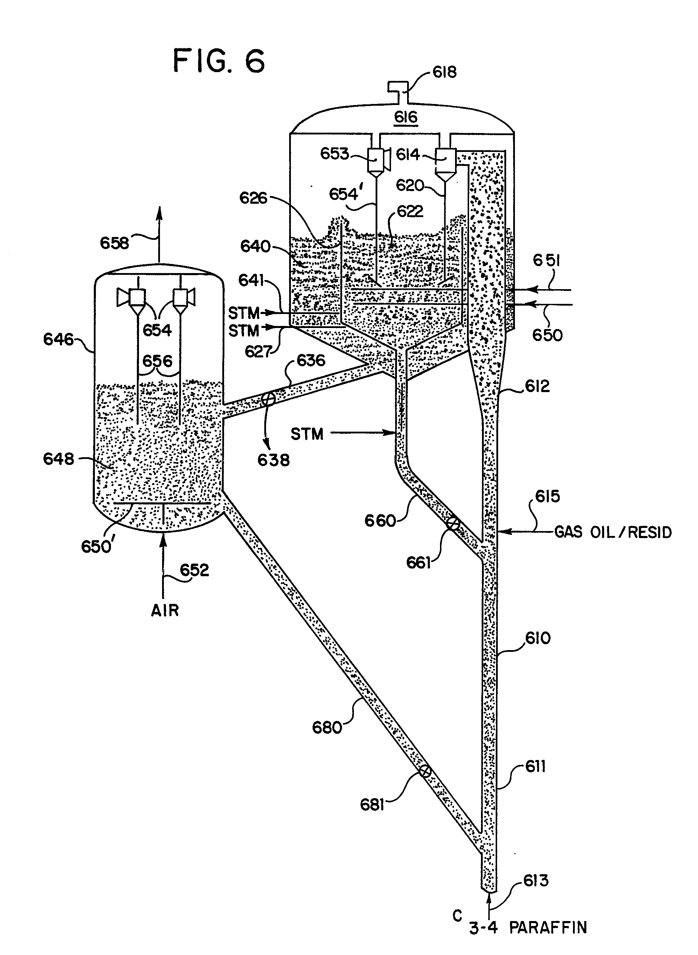

Figure 6 shows a riser reactor 610. $C_3$ and $C_4$ paraffins are charged into lower region 611 via line 613. Hot, freshly regenerated catalyst from regenerator 646 enters the bottom of riser 610 via line 680 and flow control valve 681. The $C_3$ to $C_4$ paraffins crack to light olefins, principally propylene and butylenes but including some ethylene as well. Both thermal cracking and ZSM-5 catalyzed reactions occur in lower section 611 of riser 610 due to the presence of relatively small quantities of ZSM-5 additive which circulates through the regenerator. The predominant reaction is thermal cracking because of the high temperature of the freshly regenerated catalyst which serves less as catalyst than as a heat transfer medium. Fragment generation conditions as previously disussed can be used.

Stripped additive, rich in ZSM-5, is transferred from the catalyst stripper via conduit 660 and valve 661 to an upper section 612 of riser 610. Additive combines with the fragments, conventional catalyst and with gas oil/resid feed added via line 615. The ZSM-5 concentration in the additive can be from 0.1 to 25, preferably from 1 to 5 wt%. The temperature can be 482 to 621°C (900 to 1150°F), preferably 496 to 538°C (925 to 1000°F). The total catalyst to hydrocarbon ratio can be 3:1 to 20:1 and preferably 4:1 to 10:1. The catalyst contact time can be 0.5 to 30 seconds and preferably 1 to 15 seconds. The gas oil/resid cracks to lower boiling products over the conventional FCC catalyst. The ZSM-5 catalyst helps make a higher octane gasoline product. The riser discharges into cyclone 614. Catalyst is discharged into catalyst bed 622 via dipleg 620. Vapor enters plenum chamber 216 for transfer via line 618 to a product recovery (not shown). Stripping gas, e.g., stream, supplied via line 627 elutes the conventional catalyst. The dense additive gravitates to the bottom of vessel 626 and enters line 660 for return to riser 610. Conventional catalyst from vessel 626 passes into an outer region 640 which receives stripping gas, e.g., stream, via line 641. Stripper effluent enters cyclone 653. Vapor passes to plenum chamber 616 and catalyst enters bed 622 via dipleg 654. Conventional catalyst flows down and is withdrawn via line 642 and conveyed to regenerator 646.

A light olefin feed can be added to bed 622 via line 650 to make higher molecular weight products and heat and improve stripping, as previously discussed. Propylene, butylene or mixtures thereof, can also be added via line 651 if desired.

Regenerator 646 is conventional. It contains a dense fluid bed of catalyst 658. Air is added via distributor 650 and line 652. Cyclones 654 and diplegs 656 return entrained catalyst to be 648. Flue gases are removed via line 658. Hot regenerated catalyst is returned to riser 610.

Hydrotreating of feed may be practiced, as previously discussed.

In another embodiment, not shown, the stripper of Figure 6 is replaced with the elutriating stripper of Figure 4.

In another embodiment, not shown, a dual riser FCC unit with a slightly different configuration is used.

A conventional feed contacts a conventional catalyst (it may also contain a minor amount of additive rich in ZSM-5) obtained from a conventional FCC regenerator. Catalyst and conventional FCC feed meet at the bottom of the first riser of a conventional FCC riser reator which discharges into a cyclone separator within a vessel.

In the second riser, an elutriable mixture of conventional catalyst and additive catalyst (rich in ZSM-5, and with a faster settling rate than the conventional catalyst) and a light hydrogen H2-rich gas form reactive fragments in the base of the riser. The base of the riser preferably has an enlarged diameter lower portion, which results in lower superficial vapor velocities in the base of the riser than in the top of the riser. Preferably the settling velocity of the additive catalyst approaches the superficial vapor velocity in the bottom of the riser. This results in a longer residence time for the additive catalyst, rich in ZSM-5, in the base of the riser.

Additional hot regenerated catalyst, and additional heavy feed, such as a residual fraction, are added about half way up the second riser. The resid reacts readily with the reactive fragments generated in the base of the riser. The riser preferably discharges into a cyclone which removes vapor overhead and discharges catalyst via a dipleg into an elutriating catalyst stripper, such as that shown in Figure 6. Conventional catalyst is eluted out of the central stripper by the stripping gas. The heavier, or less elutriable, additive catalyst passes down through the stripper and is recycled to the base of the elutriating riser, as previously discussed. The conventional catalyst, displaced from the central stripper by stripping gas flows into an outer annular stripper, from which it is removed for conventional regeneration in a conventional FCC unit.

A light, H2-rich feed, is charged to the base of a riser reactor 711 via line 713. Additive catalyst, rich in ZSM-5, is charged to the base of the riser via lines 780 and valve 781. The base of riser reactor 710 has an enlarged diameter section 711. The residence time of the additive catalyst is greatly enhanced in the riser, because of the lower superficial vapor velocity and the faster settling rate of the additive catalyst.

Roughly midway up the riser conventional hot regenerated catalyst is added via line 760 and valve 761. A conventional heavy feed such as a gas oil or resid fraction is admitted via line 715. The conventional feed reacts with the reactive fragments generated in the base of the riser, and is also cracked by the conventional FCC catalyst. The riser discharges into a cyclone separator 714. Overhead vapor passes into plenum space 716, while catalyst is discarged via dipleg 720 into central elutriating stripper 726. The conventional FCC catalyst is eluded out of the stripper by stripping steam. The heavier ZSM-5 rich additive is withdrawn from the bottom of the stripper, may be subjected to additional steam stripping, and is recycled via lines 780 and valve 781 to the base of the riser.

The conventional catalyst is recovered from an annular space around stripper 726 and discharged via line 736 and valve 738 into conventional FCC regenerator 746.

In another embodiment, not shown, the elutriating stripper used corresponds to that shown in Figure 4. The hydrogen reactivation zone for additive catalyst (shown in Figure 4) is optional.

**Claims**

1. A fluidized catalytic cracking process wherein a conventional catalytic cracking catalyst contacts a fresh feed in a riser have a base and an outlet to produce cracked products and spent catalyst which is stripped in a catalyst stripper and regenerated with an oxygen containing gas to produce regenerated catalyst which is recycled to the riser to crack more fresh feed characterized by generating reactive fragments in the riser by contacting a light hydrogen-rich gas with catalyst to generate reactive fragments at the base of the riser which react with the feed in the riser.

2. The process of claim 1 further characterized in that the fresh feed includes a heavy hydrogen deficient feed added to the riser at a location intermediate the base and the outlet.

3. The process of any preceding claim further characterized in that the catalytic cracking process uses dual risers for catalytic cracking.

4. The process of any preceding claim further characterized in that the catalyst comprises a mixture of conventional catalyst and an additive catalyst which is separable from the conventional catalyst.

5. The process of claim 4 further characterized by elutriation of additive catalyst from a conventional catalyst to reduce the residence time of the additive catalyst in the regenerator relative to the conventional catalyst and increase the residence time of the additive catalyst in the reactor relative to the conventional catalyst.

6. The process of claim 4 further characterized by use of a riser reactor having an enlarged base portion whereby elutriation of catalyst occurs in the base of the riser reactor.

7. The process of claim 4 further characterized in that the riser reactor has an enlarged portion near the outlet of the riser whereby catalyst elutriation occurs in the top of the riser.

8. The process of any of claims 4 to 7 further characterized by elutriating catalyst in the catalyst stripper.

9. The process of claim 8 further characterized in that the additive catalyst has a different size than the conventional catalyst and the stripper acts as a sieve to separate additive from conventional catalyst.

10. The process of claim 8 further characterized in that the stripper operates with a superficial vapor velocity sufficient to effect a separation between additive catalyst and conventional catalysts based on different settling rates.

11. The process of any of claims 4 to 10 further characterized by reactivation of the additive catalyst with hydrogen or hydrogen containing gas in a reactivation zone intermediate the catalyst stripper and the riser reactor.

12. The process of any preceding claim further characterized in that conversion of light olefins to gasoline and distillate occurs in the base of the riser reactor.

13. The process of any preceding claim further characterized in that regenerated catalyst is also added to the base of at least one riser of the FCC reactor.

FIG. 1

FIG. 2

0259156

FIG.3

0259156

FIG. 4

GAS OIL / RESID

$C_{3-4}$ PARAFFIN

FIG. 5

0259156

# FIG. 6

0259156

# FIG.7

718
716
753
714
754'
722
720
726
740
741
STM
STM
727
751
750
758
754
756
746
748
736
738
STM
750'
752
AIR
760
761
712
715
GAS OIL/RESID
710
780
781
711
713
C₃₋₄ PARAFFIN

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 101 553 (ASHLAND OIL) <br> * Figure 1; claims 1-3,9 * | 1,2,13 | C 10 G 11/18 |
| Y |  | 3-12 |  |
| X | EP-A-0 074 501 (ASHLAND OIL) <br> * Figure 1; claims 1,5,8 * | 1,2,13 |  |
| X | EP-A-0 171 460 (ASHLAND OIL) <br> * Figures 7,8; claims 1,2,6,9 * | 1,2,12 |  |
| D,Y | US-A-4 490 241 (CHOU) <br> * Figure 1; claims 1-11 * | 4-11 |  |
| D,X | US-A-3 617 497 (BRYSON) <br><br> * Figure 4 * | 1,2,7, 13 | TECHNICAL FIELDS SEARCHED (Int. Cl.4) <br><br> C 10 G <br> B 01 J |
| Y | US-A-3 894 934 (OWEN et al.) <br> * Figure; claims * | 3 |  |
| Y | FR-A-2 298 595 (MOBIL OIL) <br> * Figures 1-3; claims 1-15 * | 1-3,12 |  |

The present search report has been drawn up for all claims

| Place of search | Date of completion of the search | Examiner |
|---|---|---|
| THE HAGUE | 11-11-1987 | MICHIELS P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03.82